# EUROPEAN PATENT APPLICATION

(11) **EP 4 613 353 A1**
(43) Date of publication of application: **10.09.2025**
(21) Application number: 23887976.1
(22) Date of filing: 07.11.2023
(51) Int. Cl.: B01D 29/96, B01D 35/30

(54) **FILTER ELEMENT ASSEMBLY**

(30) Priority: 07.11.2022 CN 202211383112; 07.11.2022 CN 202211383023
(71) Applicant: Nanjing Beist Environmental Protection Technology Co., Ltd., Nanjing, Jiangsu 211151 (CN)
(72) Inventor: CHEN, Peng, Nanjing, Jiangsu 211151 (CN)
(74) Representative: Sun, Yiming
(86) International application number: PCT/CN2023/130062
(87) International publication number: WO 2024/099287

(57) **Abstract**

The present disclosure discloses a filter element assembly. The filter element assembly includes a joint, a filter element, and a locking apparatus for detachably connecting the filter element to the joint. The locking apparatus includes a sliding plate fixing cover provided with a central through hole and mounted at a bottom end of the joint, and a button sliding block provided with a central through hole and arranged between the joint and the sliding plate fixing cover in a slidable manner. The button sliding block includes arc-shaped button sliding plates arranged in a left-right symmetrical manner in a circumferential direction of the joint. One end of the arc-shaped button sliding plate is connected to an elastic element, and the other end thereof is connected to a connecting module; the arc-shaped button sliding plates swing left and right through the connecting module. Based on the linear movement mode of the existing button sliding block, the filter element assembly achieves quick replacement of the filter element and the joint by using a locking apparatus consisting of arc-shaped button sliding plates and a sliding block and adopting a novel movement mode of arc-shaped swinging.

## Description

### TECHNICAL FIELD

The present disclosure relates to the field of filter element assemblies.

### BACKGROUND

Currently, filtering apparatuses are widely used, particularly in the vast market of water purification and drinking water devices. With the development of science and technology, more and more filtering apparatuses and other products have entered the market. The filter element is the core of the filtering apparatus, and the filter element needs to be replaced, maintained, or cleaned after a period of use, which needs to remove the filter element from the filtering apparatus. At present, since the filter element is mainly fixed through connectors by means of rotating buckle connection and threaded connection, the mounting is inconvenient because tools are needed, the mounting torque is high, the water supply or discharge passage cannot be automatically disconnected, the water supply locking apparatus needs to be manually switched for each replacement, and water seeps when the filter element is inverted or positioned horizontally. These problems lead to low work efficiency in filter element detachment and consume considerable time and effort; moreover, the connectors are easy to lose and non-professionals are difficult to operate.

Based on the above problems, the affiliated enterprise, Nanjing Black Orange Environmental Protection Technology Co., Ltd. (the legal person is the same as the inventor of the present disclosure), of the applicant of the present disclosure develops a filtering apparatus with an easily replaceable use joint, with Application No. 201621378691X, and the filtering apparatus achieves the convenient replacement of the filter element by adopting a linear movement mode of a button sliding block. Based on the research and development technology, the applicant continuously researches and develops.

### SUMMARY

Objective: The present disclosure aims to provide a filter element assembly that is convenient for quickly replacing a filter element.

Technical solutions: The filter element assembly of the present disclosure includes a joint, a filter element, and a locking apparatus for detachably connecting the filter element to the joint. The locking apparatus includes a sliding plate fixing cover provided with a central through hole and mounted at a bottom end of the joint, and a button sliding block provided with a central through hole and arranged between the joint and the sliding plate fixing cover in a slidable manner. The button sliding block includes arc-shaped button sliding plates arranged in a left-right symmetrical manner in a circumferential direction of the joint. One end of the arc-shaped button sliding plate is connected to an elastic element, and the other end thereof is connected to a connecting module; the arc-shaped button sliding plates swing left and right through movement of the connecting module.

Further, according to the filter element assembly, the connecting module includes connecting rods connected to the arc-shaped button sliding plates, the other ends of the connecting rods are arranged on a connecting block in a vertically rotating and staggered manner, the connecting rod is fixedly arranged on a connecting link, and the arc-shaped button sliding plates swing left and right based on a thrust of the connecting rods and the elastic elements.

Further, according to the filter element assembly, the connecting module includes a sliding block with two inclined edges, the two inclined edges of the sliding block abut against the arc-shaped button sliding plates, respectively, the other end of the sliding block is provided with a connecting link in a connecting manner, and the arc-shaped button sliding plates swing left and right based on a thrust of the sliding block and the elastic elements.

Further, according to the filter element assembly, several grooves are formed in a side surface of the arc-shaped button sliding plate, protrusions corresponding to the grooves are arranged at an upper end of the filter element, and surfaces of the groove and the protrusion that are in contact are inclined surfaces.

Further, according to the filter element assembly, the sliding plate fixing cover is provided with notches corresponding to the grooves of the arc-shaped button sliding plates.

Further, according to the filter element assembly, the joint is provided with passages for water to flow, and the filter element is used to accommodate a filtering material, an upper end of the filter element being provided with filtering passages corresponding to the passages.

Further, according to the filter element assembly, the sliding plate fixing cover is connected to the joint through bolts, and the arc-shaped button sliding plate is provided with grooves for arc-shaped button sliding plates at positions to which the bolts are connected.

Further, according to the filter element assembly, a supporting plate for placing the connecting module is arranged on the joint in an outward extending manner, and the connecting link penetrates through the supporting plate.

Further, according to the filter element assembly, the joint is provided with a baffle at a position where the elastic elements are connected.

Beneficial effects: Compared with the prior art, the remarkable advantages of the present disclosure are as follows: based on the linear movement mode of the existing button sliding block, the filter element assembly achieves quick replacement of the filter element and the joint by using a locking apparatus consisting of arc-shaped button sliding plates and a connecting module of different structures and adopting a novel movement mode of arc-shaped left and right swinging.

### BRIEF DESCRIPTION OF THE DRAWINGS

FIG. 1 is a first schematic structural diagram of a joint and a locking apparatus of a filter element assembly according to the present disclosure;
FIG. 2 is a second schematic structural diagram of a joint and a locking apparatus of a filter element assembly according to the present disclosure;
FIG. 3 is a third schematic structural diagram of a joint and a locking apparatus of a filter element assembly according to the present disclosure;
FIG. 4 is a schematic structural diagram of a filter element according to the present disclosure.

### DETAILED DESCRIPTION

The technical solutions of the present disclosure are further described in detail below with reference to the drawings.

The filter element assembly of the present disclosure includes a joint 1, with passages for water to flow formed therein; a filter element 2 for accommodating a filtering material, where the upper end of the filter element is provided with filtering passages corresponding to the passages; and a locking apparatus 3 for detachably connecting the filter element 2 to the joint 1.

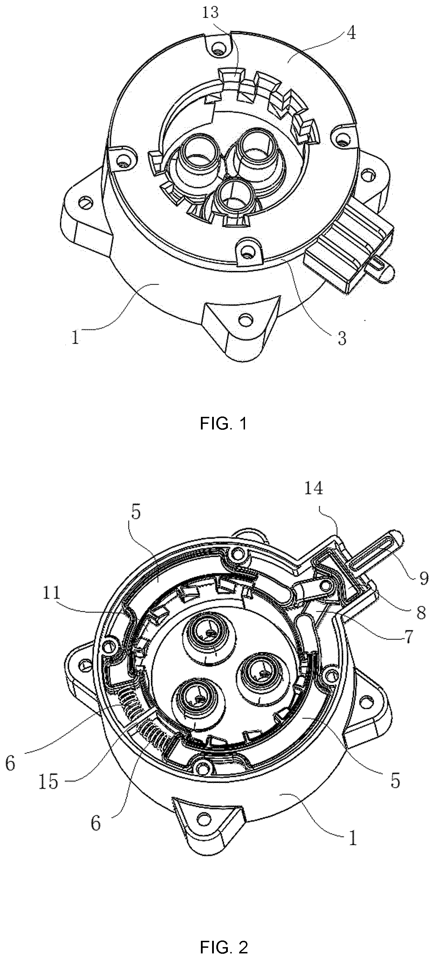

As shown in FIG. 1, the locking apparatus 3 includes a sliding plate fixing cover 4 provided with a central through hole, where the sliding plate fixing cover 4 is arranged at the lower end of the joint 1; and a button sliding block provided with a central through hole and arranged between the joint 1 and the sliding plate fixing cover 4 in a slidable manner.

### Embodiment 1

As shown in FIG. 2, the button sliding block of the filter element assembly includes two arc-shaped button sliding plates 5 arranged in the circumferential direction of the joint 1, and the two arc-shaped button sliding plates 5 are arranged in a left-right symmetrical manner. One end of the two arc-shaped button sliding plates 5 is directly connected to an elastic element 6 (preferably a spring), and correspondingly, a baffle 15 may be arranged in the joint 1 at a position where the elastic elements 6 are connected, such that the spring abuts against the joint 1. The other end of the two arc-shaped button sliding plates 5 is connected to a connecting module, and the arc-shaped button sliding plates 5 swing left and right through the movement of the connecting module, thereby achieving the convenient detachment and mounting of the filter element 1. The connecting module includes connecting rods 7, a connecting block 8, and a connecting link 9, the connecting rods 7 are connected to the connecting block 8, and the connecting rods 7 are respectively located on the upper and lower sides of the connecting block 8 and are movably connected. The other end of the connecting block 8 is fixedly arranged on the connecting link 9. The other end of the two arc-shaped button sliding plates 5 is connected to the connecting rod 7, and the two may be movably connected by using a known connecting block and connecting groove or may be integrally formed.

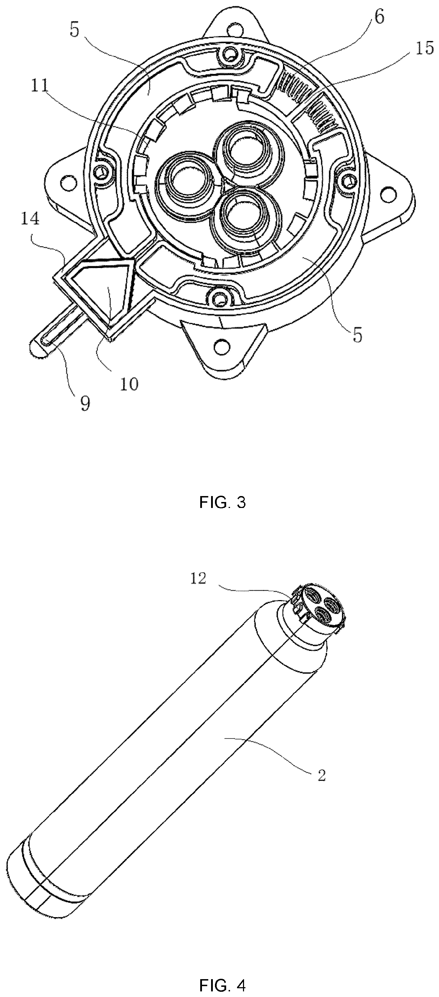

Several grooves 11 are formed in the side surface of the arc-shaped button sliding plate 5 of the button sliding block facing the through hole, and correspondingly, the filter element 2 is provided with several protrusions 12 matching the grooves 11, and the surfaces of the groove 11 and the protrusion 12 that are in contact are both inclined surfaces, as shown in FIGs. 2 and 4. Based on this, the locking and detachment between the filter element 2 and the joint 1 are achieved. The sliding plate fixing cover 4 is provided with notches 13 corresponding to the grooves 11 of the arc-shaped button sliding plates 5, as shown in FIG. 1.

The sliding plate fixing cover 4 and the joint 1 of the filter element assembly of the embodiment may be further connected through bolts, and correspondingly, grooves for arc-shaped button sliding plates are formed in the two arc-shaped button sliding plates 5 at positions to which the bolts are connected, thereby preventing the arc-shaped button sliding plates 5 from being limited in movement. A supporting plate 14 for placing the connecting module is arranged on the joint 1 in an outward extending manner, and the connecting link 9 of the connecting module penetrates through the supporting plate 14 to facilitate the subsequent achievement of a modular filter element assembly.

### Embodiment 2

Embodiment 2 and Embodiment 1 achieve the left and right swinging of the arc-shaped button sliding plate by using connecting modules with two different structural forms. Specifically:
As shown in FIG. 3, the button sliding block of the filter element assembly includes two arc-shaped button sliding plates 5 arranged in the circumferential direction of the joint 1, and the two arc-shaped button sliding plates 5 are arranged in a left-right symmetrical manner. One end of the two arc-shaped button sliding plates 5 is connected to an elastic element 6 (preferably a spring) to abut against the joint 1, and correspondingly, a baffle 15 may be arranged in the joint 1 at a position where the elastic elements 6 are connected, such that the spring abuts against the joint. The other end of the two arc-shaped button sliding plates 5 is in contact with a wedge-shaped sliding block 10 (i.e., a sliding block 10 provided with two inclined surfaces), and the arc-shaped button sliding plates 5 swing left and right through the movement of the sliding block 10, thereby achieving the convenient detachment and mounting of the filter element 2. That is, the two inclined surfaces of the sliding block 10 are in contact with the arc-shaped button sliding plates 5, respectively, and then the arc-shaped button sliding plates 5 swing left and right through the thrust of the sliding block. The other end of the sliding block 10 is connected to a connecting link 9.

Several grooves 11 are formed in the side surface of the arc-shaped button sliding plate 5 of the button sliding block facing the through hole, and correspondingly, the filter element 2 is provided with several protrusions 12 matching the grooves 11, and the surfaces of the groove 11 and the protrusion 12 that are in contact are both inclined surfaces, as shown in FIGs. 3 and 4. Based on this, the locking and detachment between the filter element 2 and the joint 1 are achieved. The sliding plate fixing cover 4 is provided with notches 13 corresponding to the grooves 11 of the arc-shaped button sliding plates 5, as shown in FIG. 1.

The sliding plate fixing cover 4 and the joint 1 of the filter element assembly of the embodiment may be further connected through bolts, and correspondingly, grooves for arc-shaped button sliding plates are formed in the two arc-shaped button sliding plates 5 at positions to which the bolts are connected, thereby preventing the arc-shaped button sliding plates 5 from being limited in movement. A supporting plate 14 for placing the sliding block 10 is arranged on the joint 1 in an outward extending manner, and the connecting link 9 of the connecting module penetrates through the supporting plate 14 to facilitate the subsequent achievement of a modular filter element assembly.

In addition, the arrangement of the internal water path structure of the filter element according to the present disclosure is the same as the technical solutions disclosed in Application No. 201621378691X, entitled "FILTERING APPARATUS WITH EASILY REPLACEABLE USE JOINT", which is not reiterated in the present disclosure. The filter element of the present disclosure is also provided with a guide groove convenient for mounting, such that the filter element 2 and the joint 1 are accurately aligned.

## Claims

1. A filter element assembly, wherein the filter element assembly comprises a joint (1), a filter element (2), and a locking apparatus (3) detachably connecting the filter element (2) to the joint (1), wherein the locking apparatus (3) comprises a sliding plate fixing cover (4) provided with a central through hole and mounted at a bottom end of the joint (1), and a button sliding block provided with a central through hole and arranged between the joint (1) and the sliding plate fixing cover (4) in a slidable manner, wherein the button sliding block comprises arc-shaped button sliding plates (5) arranged in a left-right symmetrical manner in a circumferential direction of the joint (1), one end of the arc-shaped button sliding plate (5) is connected to an elastic element (6), the other end thereof is connected to a connecting module, and the arc-shaped button sliding plates (5) swing left and right through movement of the connecting module.

2. The filter element assembly according to claim 1, wherein the connecting module comprises connecting rods (7) connected to the arc-shaped button sliding plates (5), the other ends of the connecting rods (7) are arranged on a connecting block (8) in a vertically rotating and staggered manner, the connecting block (8) is fixedly arranged on a connecting link (9), and the arc-shaped button sliding plates (5) swing left and right based on a thrust of the connecting rods (7) and the elastic elements (6).

3. The filter element assembly according to claim 1, wherein the connecting module comprises a sliding block (10) with two inclined edges, the two inclined edges of the sliding block (10) abut against the arc-shaped button sliding plates (5), respectively, the other end of the sliding block (10) is provided with a connecting link (9) in a connecting manner, and the arc-shaped button sliding plates (5) swing left and right based on a thrust of the sliding block (10) and the elastic elements (6).

4. The filter element assembly according to claim 2 or 3, wherein several grooves (11) are formed in a side surface of the arc-shaped button sliding plate (5), protrusions (12) corresponding to the grooves (11) are arranged at an upper end of the filter element (2), and surfaces of the groove (11) and the protrusion (12) that are in contact are inclined surfaces.

5. The filter element assembly according to claim 2 or 3, wherein the sliding plate fixing cover (4) is provided with notches (13) corresponding to the grooves (9) of the arc-shaped button sliding plates (5).

6. The filter element assembly according to claim 2 or 3, wherein the joint (1) is provided with passages for water to flow, and the filter element is used to accommodate a filtering material, an upper end of the filter element being provided with filtering passages corresponding to the passages.

7. The filter element assembly according to claim 2 or 3, wherein the sliding plate fixing cover (4) is connected to the joint (1) through bolts, and the arc-shaped button sliding plate (5) is provided with grooves for arc-shaped button sliding plates at positions to which the bolts are connected.

8. The filter element assembly according to claim 2 or 3, wherein a supporting plate (14) for placing the connecting module is arranged on the joint (1) in an outward extending manner, and the connecting link (9) penetrates through the supporting plate (14).

9. The filter element assembly according to claim 2 or 3, wherein the joint (1) is provided with a baffle (15) at a position where the elastic elements are connected (6).
